# EUROPÄISCHE PATENTSCHRIFT

(11) **EP 2 958 467 B1**
(45) Veröffentlichungstag und Bekanntmachung des Hinweises auf die Patenterteilung: **05.04.2017**
(21) Anmeldenummer: 13796055.5
(22) Anmeldetag: 26.11.2013
(51) Int. Cl.: A47J 31/36

(54) **MAGAZIN FÜR KAPSELN**
MAGAZINE FOR CARTRIDGES
CHARGEUR POUR DES CAPSULES

(30) Priorität: 19.02.2013 DE 102013202677
(43) Veröffentlichungstag der Anmeldung: 30.12.2015
(73) Patentinhaber: Eugster/Frismag AG, 8580 Amriswil (CH)
(72) Erfinder: FISCHER, Daniel, CH-8590 Romanshorn (CH)
(74) Vertreter: Loock, Jan Pieter
(86) Internationale Anmeldenummer: PCT/EP2013/074719
(87) Internationale Veröffentlichungsnummer: WO 2014/127863

(56) Entgegenhaltungen:
- EP-A1- 0 334 573
- EP-A1- 1 247 481
- EP-A1- 2 301 394
- EP-A1- 2 554 081
- WO-A1-2013/018066
- FR-A1- 2 907 766
- FR-A1- 2 940 754

## Beschreibung

### Stand der Technik

Die vorliegende Erfindung betrifft eine Magazineinheit zum Bestücken einer Brühvorrichtung mit einer Portionskapsel, wobei die Magazineinheit ein Vorratsmagazin zur Bevorratung von Portionskapseln aufweist, wobei die Portionskapseln entlang einer Stapelrichtung aufeinanderfolgend gestapelt sind, wobei die Magazineinheit ein Transportmittel zum Transport einer Portionskapsel aus dem Vorratsmagazin in die Brühvorrichtung aufweist.

Es ist bekannt, Getränke, wie Kaffee, aus Portionskapseln herzustellen, die gemahlenen und gerösteten Kaffee mit einer bestimmten Dosis enthalten. Die Verwendung von Portionskapseln hat gegenüber einer herkömmlichen Getränkezubereitung den Vorteil, dass die Arbeitsgänge der Getränkezubereitung erleichtert, eine saubere Zubereitung ohne sichtbaren Rückstand von Kaffeesatz gewährleistet und die Dosierung und die Qualität des zubereiteten Produkts höchsten Anforderungen genügt und auf reproduzierbare Weise steuerbar ist.

Aus der EP 1 379 153 B1 ist beispielsweise eine Magazineinheit mit einer Leseeinrichtung zu einer Erfassung einer Kennung auf einer Kaffeemehl enthaltenen Portionseinheit bekannt. Die bekannte Magazineinheit besteht im Wesentlichen aus einem Drehteller, auf dem in einer annähernd kreisförmigen Anordnung Magazinröhren befestigt sind. Jede der Magazinröhren ist zur Aufnahme eines Stapels von mit ihrem Boden nach unten gerichteten Portionskapseln geeignet, wobei jede der Magazinröhren jeweils Portionskapseln einer von mehreren zur Verfügung stehenden Kaffeearten aufnimmt. Jede der Magazinröhren weist dem äußeren Rand des Drehtellers benachbart eine Magazinröhrenausschuböffnung auf, durch die hindurch jeweils die unterste Portionskapsel aus der in eine Entnahmeposition gedrehte Magazinröhre ausgeschoben werden kann.
Weiterhin ist aus der EP 1 310 199 A1 beispielsweise eine Vorrichtung zur Getränkezubereitung aus einer eine zu extrahierende Substanz enthaltenden Kapseln in einem Extraktionssystem der Vorrichtung bekannt. Die Vorrichtung weist einen Greifer zum Ergreifen einer vorgewählten Kapsel in dem Speichersystem auf. Der Greifer umfasst eine Verschlussplatte, die mit einer Öffnung versehen ist, die für den freien Durchgang einer gegenüber dieser gelegenen Kapsel ausreichend ist. Unter dieser Platte befindet sich ein Backenpaar in fester Verbindung mit der Verschlussplatte, mit der es sich um eine zentrale Drehachse bewegt, die zur Achse eines Karussells des Speichersystems parallel und gegen diese versetzt ist. Der Greifer ist auf einer Kreisbahn beweglich, die die erste Kreisbahn des Speichersystems schneidet. Die wesentlichen Greifelemente, welche die Öffnung und die Backen sind, sind zusammen auf der Bahn beweglich, so dass sie sich zum Zeitpunkt des Ergreifens gegenüber dem Durchgang der Rohrtragplatte befinden.

Weitere Stand der Technik Dokumente sind: EP82301394, WO2013/018066, FR2907766, EP2554081, EP0334573, EP1247481, FR2940754. Nachteilig an solchen Vorrichtungen ist, dass solche bekannten Vorrichtungen vergleichsweise aufwendig herzustellen sind und eine Vielzahl in komplexer Weise zusammenwirkender Bauteile aufweisen. Dadurch wird die Herstellung der Magazineinheit vergleichsweise teuer. Außerdem weisen solche Vorrichtungen einen hohen Verschleiß auf und besitzen daher eine geringe Lebensdauer. Weiterhin wird durch die vergleichsweise komplizierte Bedienung und Wartung die Benutzerfreundlichkeit erheblich herabgesetzt.

### Offenbarung der Erfindung

Der Erfindung liegt daher die Aufgabe zu Grunde, eine Magazineinheit zum Bestücken einer Brühvorrichtung mit einer Portionskapsel bereitzustellen, welche die Nachteile des Standes der Technik nicht aufweist und eine gegenüber dem Stand der Technik einfacher und kostengünstiger herzustellen ist und die Benutzerfreundlichkeit verbessert, die Lebensdauer erhöht und den Wartungsaufwand reduziert.

Diese Aufgabe wird erfindungsgemäß durch eine Magazineinheit zum Bestücken einer Brühvorrichtung mit einer Portionskapsel gelöst, wobei die Magazineinheit ein Vorratsmagazin zur Bevorratung von Portionskapseln aufweist, wobei die Portionskapseln entlang einer Stapelrichtung aufeinanderfolgend gestapelt sind, wobei die Magazineinheit ein Transportmittel zum Transport einer Portionskapsel aus dem Vorratsmagazin in die Brühvorrichtung aufweist, wobei das Transportmittel zwischen einer Entnahmestellung zur Entnahme der Portionskapsel aus dem Vorratsmagazin und einer Abgabestellung zum Bestücken der Brühvorrichtung mit der Portionskapsel um eine Schwenkachse schwenkbar ist, welche zur Stapelrichtung senkrecht angeordnet ist.

In vorteilhafter Weise wird durch die Verwendung eines solchen Transportmittels, welches zwischen der Entnahmestellung und der Abgabestellung schwenkbar gelagert ist, eine mit vergleichsweise einfachen Mitteln herstellbare Magazineinheit bereitgestellt. Das Transportmittel ist dadurch sowohl zum Vereinzeln des Stapels von Portionskapseln, als auch zum Transport der Portionskapsel von dem Vorratsmagazin zu der Brühvorrichtung einsetzbar. Die Magazineinheit ist insbesondere zur Verwendung mit rotationssymmetrischen Portionskapseln vorgesehen, die einen Kapseldeckel und einen Kapselboden aufweisen. Insbesondere weist der Kapseldeckel eine Haupterstreckungsebene parallel zu einer weiteren Haupterstreckungsebene des Kapselbodens auf. Bevorzugt fällt die Portionskapsel in der Entnahmestellung in Stapelrichtung aus dem Vorratsmagazin in eine Kapselaufnahme des Transportmittels, sodass die Portionskapsel mit dem Kapselboden nach unten - d.h. in Richtung des Schwerefeldes der Erde - in der Kapselaufnahme zum Liegen kommt. Das Transportmittel ist insbesondere derart ausgebildet, dass die Portionskapsel durch die Schwenkbewegung des Transportmittels um die zur Stapelrichtung senkrechte Schwenkachse mitbewegt wird. Insbesondere ist die Kapselaufnahme derart ausgebildet, beispielsweise mittels einer Ausnehmung, dass die Portionskapsel in der Abgabestellung aus der Kapselaufnahme parallel zur Stapelrichtung bzw. zum Schwerefeld der Erde aus der Kapselaufnahme in einer solchen Weise herausfällt, dass die Haupterstreckungsebene des Kapseldeckels bzw. die Haupterstreckungsebene des Kapselbodens jeweils parallel zum Schwerefeld der Erde ausgerichtet sind, wobei diese Stellung der Kapsel nachfolgend als Kapselaufnahmestellung bezeichnet wird.

Dies ist insbesondere vorteilhaft, da die Magazineinheit zusammen mit einer Brühvorrichtung verwendbar ist, welche die Portionskapsel nur in der Kapselaufnahmestellung aufnehmen kann. Insbesondere weist eine solche Brühvorrichtung zum Extrahieren der Portionskapsel ein erstes Brühkammerelement und ein zweites Brühkammerelement auf, wobei das erste Brühkammerelement und/oder das zweite Brühkammerelement entlang einer, insbesondere zur Stapelrichtung senkrechten, Axialrichtung zwischen einer Ladestellung, in welcher das erste und zweite Brühkammerelement voneinander beabstandet sind, und einer Extraktionsstellung, in welcher das erste und das zweite Brühkammerelement eine im Wesentlichen geschlossene Brühkammer bilden, bewegbar ist. In der Ladestellung ist eine solche Brühvorrichtung insbesondere zur Aufnahme der Portionskapsel in der Kapselaufnahmestellung konfiguriert.

Die Schwenkbewegung des Transportmittels von der Entnahmestellung in die Abgabestellung erfolgt insbesondere gegensinnig zur Schwenkbewegung des Transportmittels von der Abgabestellung in die Entnahmestellung. Alternativ ist auch eine Schwenkbewegung des Transportmittels in die lediglich eine Schwenkrichtung - d.h. entweder im Uhrzeigersinn oder dem Uhrzeigersinn entgegen - vorgesehen. Insbesondere weist das Transportmittel bei einer Ausgestaltung der Magazineinheit mit Verschwenkung des Transportmittels in nur eine einzige Schwenkrichtung mehrere Kapselaufnahmen, bevorzugt zwei Kapselaufnahmen, auf.

Insbesondere weist das Transportmittel eine Prüfvorrichtung zur Erkennung einer Markierungsinformation auf, wobei die Markierungsinformation auf der Portionskapsel, insbesondere am Kapselboden, angeordnet ist. Insbesondere ist die Markierungsinformation eine Portionskapselkodierung, eine Portionskapselkennung und/oder ein Quick-Response (QR) Code.

Gemäß einer bevorzugten Weiterbildung der vorliegenden Erfindung ist vorgesehen, dass das Vorratsmagazin mehrere auf einem Träger, insbesondere Drehteller, angeordnete Magazinröhren aufweist, wobei jeweils eine Magazinröhre zur Stapelung der Portionskapseln entlang der Stapelrichtung vorgesehen ist, wobei die Magazinröhren wahlweise zusammen mit dem Träger in eine Übergabeposition bewegbar sind, wobei der Träger unter jeder Magazinröhre einen durchlässigen Abschnitt aufweist, wobei in der Übergabeposition unterhalb des durchlässigen Abschnitts das Transportmittel zum Transport der jeweils untersten Portionskapsel von dem Vorratsmagazin in die Brühvorrichtung angeordnet ist.

Hierdurch ist es vorteilhaft möglich eine Vielzahl unterschiedlicher Kaffeesorten in den einzelnen Magazinröhren unterzubringen und wahlweise eine Magazinröhre, welche die gewünschte Kaffeesorte enthält, über dem Transportmittel zu positionieren. Dadurch ist eine Bestückung der Brühvorrichtung mit der ausgewählten Kaffeesorte möglich. Durch die Anordnung mehrerer Magazinröhren auf einem Drehteller ist es außerdem besonders vorteilhaft möglich eine Vielzahl von Portionskapseln in dem Vorratsmagazin der Magazineinheit unterzubringen, sodass das Vorratsmagazin vergleichsweise selten mit neuen Portionskapseln nachgefüllt werden muss.

Insbesondere ist der Drehteller gegenüber einer Basisplatte um eine, insbesondere durch einen Mittelpunkt des Drehtellers verlaufende, Drehachse drehbar angeordnet, wobei die Basisplatte insbesondere einen weiteren durchlässigen Abschnitt aufweist. Die Basisplatte wird nachfolgend auch als weiterer Träger bezeichnet. Insbesondere sind die Magazinröhren auf dem Drehteller kreisförmig um die Drehachse angeordnet. Dadurch ist es vorteilhaft möglich, dass wahlweise eine Magazinröhre der kreisförmig auf dem Drehteller angeordneten Magazinröhren durch eine Drehbewegung des Drehtellers über dem weiteren durchlässigen Abschnitt der Basisplatte in der Übergabeposition positionierbar ist. Unterhalb jeder Magazinröhre ist insbesondere ein durchlässiger Abschnitt angeordnet, sodass in der Übergabeposition der durchlässige Abschnitt unter der ausgewählten Magazinröhre mit dem weiteren durchlässigen Abschnitt parallel zur Stapelrichtung derart übereinander angeordnet sind, dass die Portionskapsel durch den durchlässigen Abschnitt und den weiteren durchlässigen Abschnitt hindurch bewegbar ist. Gemäß einer bevorzugten Weiterbildung der vorliegenden Erfindung ist vorgesehen, dass das Transportmittel eine Ausnehmung zur Aufnahme der Portionskapsel aufweist, wobei die Ausnehmung insbesondere zur Aufnahme genau einer Portionskapsel ausgebildet ist, wobei die Ausnehmung ein Ablagemittel, insbesondere eine Ablagefläche, zur Ablage der Portionskapsel in der Entnahmestellung und ein Mitnahmemittel, insbesondere eine Mitnahmefläche, zur Mitnahme der Portionskapsel während einer Schwenkbewegung des Transportmittels in die Abgabestellung aufweist.

Hierdurch ist es vorteilhaft möglich ein kompakt und stabil ausgebildetes Transportmittel, insbesondere in Form einer Trommel, bereitzustellen, sodass hierdurch eine Magazineinheit mit vergleichsweise langer Lebensdauer, niedrigem Wartungsaufwand und hoher Benutzerfreundlichkeit bereitgestellt wird.

Gemäß einer bevorzugten Weiterbildung der vorliegenden Erfindung ist vorgesehen, dass das Transportmittel ein Zurückhaltemittel zum Zurückhalten der nachfolgenden Portionskapsel in dem Vorratsmagazin aufweist, wobei das Zurückhaltemittel insbesondere eine Außenseite des Transportmittels ist, wobei das Transportmittel derart angeordnet ist, dass die nachfolgende Portionskapsel in dem Vorratsmagazin auf dem Zurückhaltemittel des Transportmittels aufliegt, wenn sich das Transportmittel nicht in der Entnahmestellung befindet.

Hierdurch ist es vorteilhaft möglich ein einziges Transportmittel sowohl zum Transport der Portionskapsel von dem Vorratsmagazin in die Brühvorrichtung, als auch gleichzeitig zum Vereinzeln der gestapelten Portionskapseln des Vorratsmagazins zu benutzen. Dadurch werden in vorteilhafter Weise ein aufwendiger Aufbau der Magazineinheit und/oder hohe Kosten bei der Herstellung durch vergleichsweise komplexe Bauteile vermieden. Da das, insbesondere als Trommel ausgebildete, Transportmittel im Vergleich zum Stand der Technik kompakt und stabil ist, wird hierdurch eine Magazineinheit mit vergleichsweise langer Lebensdauer, niedrigem Wartungsaufwand und hoher Benutzerfreundlichkeit bereitgestellt. Die Außenseite ist insbesondere eine Mantelfläche eines als Trommel ausgebildeten Transportmittels.

Gemäß einer bevorzugten Weiterbildung der vorliegenden Erfindung ist vorgesehen, dass das Transportmittel trommelförmig ausgebildet ist, wobei die Außenseite eine Mantelfläche des Transportmittels zum Zurückhalten der nachfolgenden Portionskapsel in dem Vorratsmagazin ist, wobei die Ausnehmung ein als Mitnahmefläche ausgebildetes Mitnahmemittel und ein als Ablagefläche ausgebildetes Ablagemittel aufweist.

Hierdurch ist es vorteilhaft möglich, mit vergleichsweise geringen Materialkosten eine zuverlässig arbeitende Magazineinheit mit vergleichsweise langer Lebensdauer bereitzustellen.

Gemäß einer bevorzugten Weiterbildung der vorliegenden Erfindung ist vorgesehen, dass die Ausnehmung derart ausgebildet ist, dass die Mitnahmefläche die Ablagefläche zu einer Seite hin begrenzt, wobei das Transportmittel entlang der Ablagefläche an der zur Mitnahmefläche gegenüberliegenden Seite eine Öffnung zur Abgabe der Portionskapsel an die Brühvorrichtung in der Abgabestellung aufweist.

Hierdurch ist es vorteilhaft möglich, die Magazineinheit in Kombination mit einer Brühvorrichtung zu verwenden, welche zur Aufnahme der Portionskapsel in eine zum Schwerefeld der Erde parallele Laderichtung konfiguriert ist, wobei die Portionskapsel in einer Kapselaufnahmestellung der Brühvorrichtung zugeführt werden muss. In der Kapselaufnahmestellung weist die Portionskapsel parallel zum Schwerefeld der Erde ausgerichtete Haupterstreckungsebenen des Kapseldeckels und/oder des Kapselbodens auf.

Gemäß eines weiteren Gegenstandes oder einer bevorzugten Weiterbildung der vorliegenden Erfindung ist ein Brühsystem mit einer Magazineinheit und einer Brühvorrichtung mit einer Brühkammer zum Extrahieren und/oder Lösen einer in einer Portionskapsel vorgesehenen Substanz, insbesondere Kaffee, vorgesehen, wobei die Brühkammer ein erstes Brühkammerelement und ein zweites Brühkammerelement aufweist und das erste Brühkammerelement zwischen einer Ladestellung, in welcher das erste und das zweite Brühkammerelement voneinander beabstandet sind, und einer Extraktionsstellung, in welcher das erste und das zweite Brühkammerelement zur Bildung einer im Wesentlichen geschlossenen Brühkammer einander angenähert sind, bewegbar ist.

Hierdurch ist es vorteilhaft möglich die Brühvorrichtung mit einer Vielzahl unterschiedlicher Kaffeesorten automatisch zu bestücken. Insbesondere wird hierdurch ein stabiles Brühsystem mit einer vergleichsweise langen Lebensdauer bereitgestellt. Besonders vorteilhaft wird dies durch das vergleichsweise stabile und kompakt ausgebildete Transportmittel erreicht, da das Transportmittel sowohl zum Vereinzeln des Stapels von Portionskapseln, als auch gleichzeitig zum Transport der entnommenen Portionskapsel aus dem Vorratsmagazin in die Brühvorrichtung einsetzbar ist.

Gemäß eines weiteren Gegenstandes ist ein Verfahren zum Bestücken einer Brühvorrichtung mit einer Portionskapsel vorgesehen, wobei in einem ersten Verfahrensschritt Portionskapseln in einem Vorratsmagazin zur Bevorratung entlang einer Stapelrichtung gestapelt werden, wobei in einem zweiten Verfahrensschritt eine Portionskapsel von einer Außenseite des Transportmittels in dem Vorratsmagazin zurückgehalten wird, wobei in einem dritten Verfahrensschritt die Portionskapsel in einer Entnahmestellung des Transportmittels in eine Ausnehmung des Transportmittels bewegt wird, wobei in einem vierten Verfahrensschritt die Portionskapsel in einer Abgabestellung des Transportmittels zur Bestückung der Brühvorrichtung in eine Brühkammer der Brühvorrichtung bewegt wird, wobei das Transportmittel zwischen der Entnahmestellung und der Abgabestellung um eine Schwenkachse geschwenkt wird, welche zur Stapelrichtung senkrecht angeordnet ist.

Hierdurch ist es vorteilhaft möglich die Brühvorrichtung mit einer Vielzahl unterschiedlicher Kaffeesorten automatisch zu bestücken. Insbesondere wird hierdurch ein Verfahren bereitgestellt, welches vorteilhaft ein Transportmittel sowohl zum Vereinzeln des Stapels von Portionskapseln, als auch gleichzeitig zum Transport der entnommenen Portionskapsel aus dem Vorratsmagazin in die Brühvorrichtung verwendet. Dadurch ist es vorteilhaft möglich eine Brühvorrichtung mit einer Portionskapsel zu bestücken, wobei die Brühvorrichtung eine Brühkammer zum Extrahieren und/oder Lösen einer in der Portionskapsel vorgesehenen Substanz, insbesondere Kaffee, aufweist, wobei die Brühkammer ein erstes Brühkammerelement und ein zweites Brühkammerelement aufweist und das erste Brühkammerelement zwischen einer Ladestellung, in welcher das erste und das zweite Brühkammerelement voneinander beabstandet sind, und einer Extraktionsstellung, in welcher das erste und das zweite Brühkammerelement zur Bildung einer im Wesentlichen geschlossenen Brühkammer einander angenähert sind, entlang einer Axialrichtung bewegbar ist, wobei die Axialrichtung insbesondere eine senkrecht zum Schwerefeld der Erde angeordnete Horizontalrichtung ist. Insbesondere ist die Portionskapsel in eine solche Brühvorrichtung nur entlang einer parallel zur Stapelrichtung bzw. senkrecht zur Horizontalrichtung angeordnete Laderichtung zuführbar. Insbesondere ist die Portionskapsel bezüglich einer Mittelachse rotationssymmetrisch ausgebildet, wobei die Mittelachse insbesondere entlang einer den Kapselboden und den Kapseldeckel verbindenden Gerade verläuft. Die Portionskapsel wird durch die Schwenkbewegung des Transportmittels von der Entnahmestellung in die Abgabestellung insbesondere derart durch das Transportmittel bewegt, dass die Mittelachse in der Abgabestellung senkrecht zur Laderichtung der Brühvorrichtung angeordnet ist, sodass die Brühvorrichtung die Portionskapsel aufnehmen kann.

Gemäß einer bevorzugten Weiterbildung der vorliegenden Erfindung ist vorgesehen, dass während der Schwenkbewegung des Transportmittels zwischen der Entnahmestellung und der Abgabestellung gleichzeitig die nachfolgende Portionskapsel von der Außenseite des Transportmittels zurückgehalten wird.

Hierdurch ist es vorteilhaft möglich ein einziges Transportmittel sowohl zum Transport der Portionskapsel von dem Vorratsmagazin in die Brühvorrichtung, als auch gleichzeitig zum Vereinzeln der gestapelten Portionskapseln des Vorratsmagazins zu benutzen. Dadurch werden in vorteilhafter Weise ein aufwendiger Aufbau der Magazineinheit und/oder hohe Kosten bei der Herstellung durch vergleichsweise komplexe Bauteile vermieden. Da das, insbesondere als Trommel ausgebildete, Transportmittel im Vergleich zum Stand der Technik kompakt und stabil ist, wird hierdurch eine Magazineinheit mit vergleichsweise langer Lebensdauer, niedrigem Wartungsaufwand und hoher Benutzerfreundlichkeit bereitgestellt. Die Außenseite ist insbesondere eine Mantelfläche eines als Trommel ausgebildeten Transportmittels.

Gemäß einer bevorzugten Weiterbildung der vorliegenden Erfindung ist vorgesehen, dass die Portionskapsel im dritten Verfahrensschritt derart in die Ausnehmung des Transportmittels bewegt wird, dass die Portionskapsel mit dem Kapselboden auf einem Ablagemittel, insbesondere einer Ablagefläche, der Ausnehmung zum Liegen kommt, wobei die Portionskapsel während der Schwenkbewegung von der Entnahmestellung in die Abgabestellung von einem Mitnahmemittel des Transportmittels, insbesondere einer Mitnahmefläche, geführt wird.

Hierdurch ist es vorteilhaft möglich, die Magazineinheit in Kombination mit einer Brühvorrichtung zu verwenden, welche zur Aufnahme der Portionskapsel in eine zum Schwerefeld der Erde parallele Laderichtung konfiguriert ist, wobei die Portionskapsel in einer Kapselaufnahmestellung der Brühvorrichtung zugeführt werden muss. In der Kapselaufnahmestellung weist die Portionskapsel parallel zum Schwerefeld der Erde ausgerichtete Haupterstreckungsebenen des Kapseldeckels und/oder des Kapselbodens auf.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Figuren

- Figur 1: zeigt schematisch eine Schnittbildansicht eines Brühsystems gemäß einer ersten Ausführungsform der vorliegenden Erfindung.
- Figur 2: zeigt schematisch eine Draufsicht einer Magazineinheit gemäß einer zweiten Ausführungsform der vorliegenden Erfindung.
- Figuren 3 bis 5: zeigen schematische Schnittbildansichten einer Magazineinheit gemäß einer dritten Ausführungsform der vorliegenden Erfindung.
- Figuren 6 und 7: zeigen schematische Schnittbildansichten einer Brühvorrichtung eines Brühsystems gemäß einer vierten Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

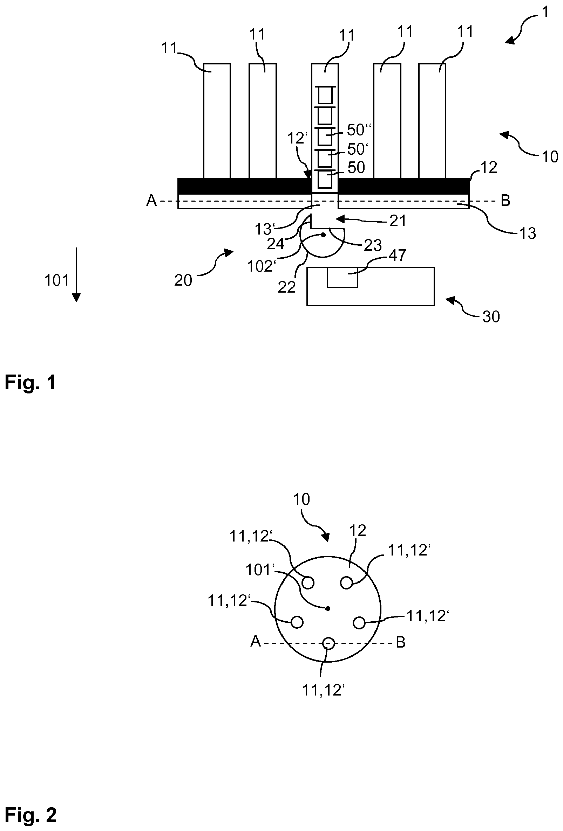

In **Figur 1** ist schematisch eine Schnittbildansicht eines Brühsystems 1 gemäß einer ersten Ausführungsform der vorliegenden Erfindung dargestellt. Das Brühsystem 1 ist entlang der Schnittlinie A-B (vgl. Figur 2) dargestellt. Das Brühsystem 1 weist eine Magazineinheit 10, 20 mit einem Vorratsmagazin 10 und einem Transportmittel, sowie eine Brühvorrichtung 30 auf. In dem Vorratsmagazin 10, sind Portionskapseln 50, 50', 50" entlang einer Stapelrichtung 101, welche insbesondere parallel zum Schwerefeld der Erde 101 verläuft, gestapelt angeordnet.

Zur Stapelung der Portionskapseln 50, 50', 50" weist das Vorratsmagazin 10 insbesondere mehrere gleichartig ausgebildete Magazinröhren 11 auf. In jeder Magazinröhre 11 sind die Portionskapseln 50, 50', 50" derart gestapelt, dass jeweils der Kapselboden 51 einer Portionskapsel 50, 50', 50" in Richtung des Schwerefelds der Erde 101 unterhalb des Kapseldeckels 54 angeordnet ist. Insbesondere weist das Vorratsmagazin 10 einen Träger 12, insbesondere Drehteller 12, auf, auf welchem die Magazinröhren 11 fest angebracht sind. Der Drehteller ist insbesondere drehbar um eine Drehachse 101' gelagert, sodass die Magazinröhren 11 zusammen mit dem Träger bewegt werden können. Unterhalb jeder Magazinröhre 11 weist der Träger 12 einen durchlässigen Ausschnitt 12' auf, welcher zur Entnahme der Portionskapsel 50, 50', 50" aus dem Vorratsmagazin 11, insbesondere der über einem weiteren durchlässigen Abschnitt 13' positionierten Magazinröhre 11, vorgesehen ist. Dazu ist unterhalb des Trägers 12 insbesondere ein weiterer Träger 13 mit dem weiteren durchlässigen Abschnitt 13' angeordnet, welcher die durchlässige Öffnungen 12' unter denjenigen Magazinröhren 11 verschließt, welche sich nicht über der weiteren durchlässigen Öffnung 13' des weiteren Trägers 13 befinden. Weiterhin wird durch eine Rotationsbewegung des Trägers 12 gegenüber dem weiteren Träger 13 jeweils eine ausgewählte Magazinröhre 11 der mehreren Magazinröhren 11 über dem weiteren durchlässigen Abschnitt 13' positioniert, dass eine Entnahme der untersten Kapsel 50, 50', 50" aus der ausgewählten Magazinröhre 11 möglich ist. Dadurch ist es insbesondere vorteilhaft möglich die Magazinröhren 11 jeweils mit unterschiedliche Kaffeesorten enthaltende Portionskapseln 50, 50', 50" zu bestücken und mittels der Rotationsbewegung des Trägers 12 eine bestimmte Kaffeesorte auszuwählen.

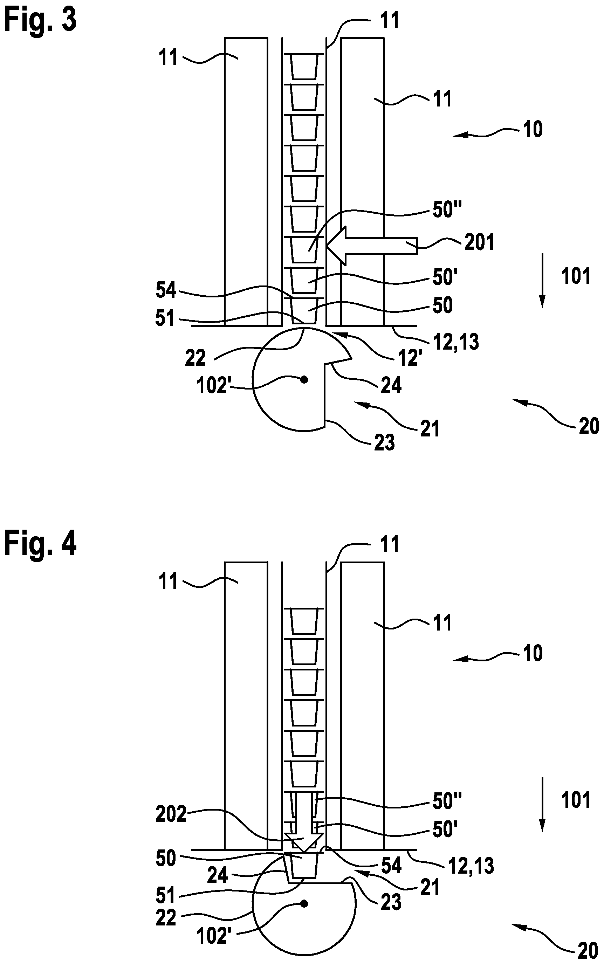

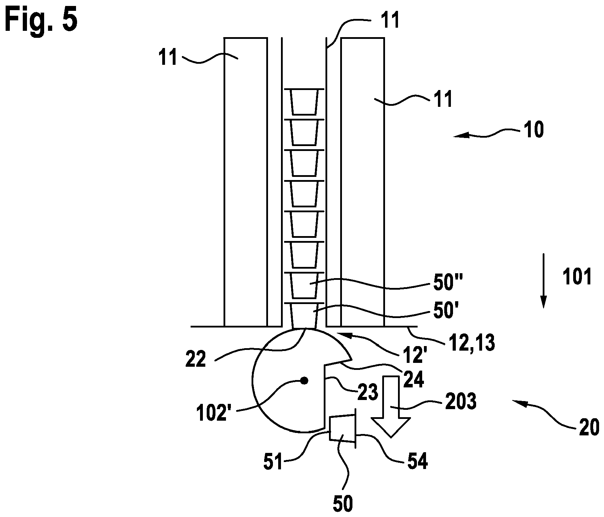

Weiterhin ist das Transportmittel 20 in Stapelrichtung 101 bzw. in Richtung des Schwerefelds der Erde 101 unterhalb des Trägers 12, insbesondere unterhalb der weiteren durchlässigen Öffnung 13' des weiteren Trägers 13, angeordnet. Das Transportmittel 20 ist um eine Schwenkachse 102' zwischen einer Entnahmestellung und einer Abgabestellung schwenkbar angeordnet. In der Entnahmestellung wird, insbesondere genau, eine unterste Portionskapsel 50 aus der Magazinröhre entlang der Stapelrichtung 101 bzw. in Richtung des Schwerefelds der Erde 101 in eine Ausnehmung 21 des Transportmittels 20, insbesondere durch Kraftwirkung des Schwerefelds der Erde, bewegbar. Die Ausnehmung 21 ist insbesondere derart ausgebildet, dass die Portionskapsel 50 mit dem Kapselboden 51 (siehe Fig. 3) nach der Entnahme auf einer Ablagemittel 23 der Ausnehmung 21 aufliegt. Insbesondere weist die Ausnehmung 21 weiterhin ein Mitnahmemittel 24 auf, wobei das Mitnahmemittel 24 derart ausgebildet ist, dass die Portionskapsel 50 mittels einer Schwenkbewegung des Transportmittels 20 um die Schwenkachse 102' - in Fig. 1 in Uhrzeigerrichtung - mit dem Transportmittel 20 mitbewegt wird. Insbesondere wird das Transportmittel 20 dabei bevorzugt um einen Winkel zwischen 30 und 150 Grad, bevorzugt zwischen 60 und 120 Grad, ganz besonders bevorzugt um 90 Grad, verschwenkt, um ein Herausfallen der Portionskapsel 50 aus der Ausnehmung 21 des Transportmittels 20 zu bewirken. Weiterhin ist die Ausnehmung 21 insbesondere derart ausgebildet, dass die Portionskapsel 50 in einer solchen Weise in der Abgabestellung aus der Ausnehmung herausbefördert wird, dass die Haupterstreckungsebene des Kapseldeckels 54 und/oder des Kapselbodens 51 parallel zum Schwerefeld der Erde 101 ausgerichtet ist. Dabei wird die Portionskapsel 50 in eine solche Kapselaufnahmestellung bewegt (siehe Fig. 5), dass die Portionskapsel 50 einer Zuführöffnung 47 der Brühvorrichtung 30 zugeführt werden kann, wobei die Brühvorrichtung nur zur Aufnahme von Portionskapseln 50, 50', 50" entlang einer zum Schwerefeld der Erde 101 parallelen Laderichtung 101 konfiguriert ist.

In **Figur 2** ist schematisch eine Draufsicht einer Magazineinheit 10 gemäß einer zweiten Ausführungsform der vorliegenden Erfindung dargestellt. Die Magazineinheit 10 weist mehrere auf einem als Drehteller 12 ausgebildeten Träger 12 auf einer Kreisbahn angeordnete Magazinröhren 11 auf. Besonders bevorzugt weist der Drehteller insbesondere 15 Magazinröhren 11 auf, wobei der Tellerdurchmesser 320 mm beträgt. Insbesondere ist jede Magazinröhre 11 zur Aufnahme von bevorzugt 32 Portionskapseln ausgelegt. Mittels einer Drehbewegung des Trägers 12 um die insbesondere zur Stapelrichtung 101 und/oder zum Schwerefeld der Erde 101 parallele Drehachse 101' wird wahlweise eine Magazinröhre 11 oberhalb des Transportmittels 20 zur Entnahme einer Portionskapsel 50, 50', 50" aus der ausgewählten Magazinröhre 11 positioniert.

In **Figuren 3 bis 5** sind schematische Schnittbildansichten einer Magazineinheit 10 gemäß einer dritten Ausführungsform der vorliegenden Erfindung dargestellt. Die Magazineinheit 10 weist mehrere Magazinröhren 11 zur Stapelung von Portionskapseln 50, 50', 50",... entlang einer zum Richtung des Schwerefelds der Erde 101 parallelen Stapelrichtung 101 auf. Die Portionskapseln 50, 50', 50" sind dabei jeweils mit dem Kapselboden 51 nach unten innerhalb einer Magazinröhre 11 gestapelt. Die mehreren Magazinröhren 11 sind auf einem drehbeweglichen Träger 12 angeordnet, wobei der Träger 12 unterhalb jeder Magazinröhre eine durchlässige Öffnung 12' aufweist. Mittels einer Drehbewegung des Trägers 12 um eine zur Stapelrichtung 101 parallele Drehachse 101' ist wahlweise eine Magazinröhre 11 der mehreren Magazinröhren oberhalb des Transportmittels 20 positionierbar. Der Träger 12 ist insbesondere gegenüber einem weiteren Träger 13 drehbar gelagert, wobei der weitere Träger 13 an der Stelle des Transportmittels insbesondere eine weitere durchlässige Öffnung 13' (siehe Fig. 1) aufweist. Das Transportmittel 20 weist eine Kapselaufnahme 21 mit einem Ablagemittel 23 und einem Mitnahmemittel 24 auf. Das Transportmittel weist weiterhin ein Zurückhaltemittel 22 zum Zurückhalten der Portionskapseln 50, 50', 50" in der Magazinröhre 11 des Vorratsmagazins 10 auf. Besonders bevorzugt ist das Transportmittel 20 insbesondere als Trommel 20 ausgebildet, wobei die Trommel 20 ein als Mantelfläche 22 ausgebildetes Zurückhaltemittel 22 aufweist und um eine, insbesondere zur Stapelrichtung 101 senkrechte, Schwenkachse schwenkbar angeordnet ist. Mittels einer Schwenkbewegung ist die Trommel 20 zwischen einer Entnahmestellung, in der die unterste Portionskapsel 50 aus der Magazinröhre 11 entnehmbar ist, und einer Abgabestellung, in der eine entnommene Portionskapsel 50 aus dem Transportmittel 20 herausbeförderbar ist, schwenkbar.
Weiterhin weist das Transportmittel 20 bzw. die Trommel 20 insbesondere eine als Ausnehmung 21 ausgebildete Kapselaufnahme 21 auf, wobei das Ablagemittel 23 als eine Ablagefläche 23 und das Mitnahmemittel 24 als eine Mitnahmefläche 24 ausgebildet ist. Die Ausnehmung 23 ist insbesondere derart ausgebildet, dass die Portionskapsel 50, 50', 50" in der Entnahmestellung mit dem Kapselboden 51 auf der Ablagefläche aufliegend bewegbar ist und in der Abgabestellung an einer entlang der Ablagefläche 23 der Mitnahmefläche 24 gegenüberliegenden Seite in Richtung der Stapelrichtung 101 bzw. des Schwerefeldes der Erde 101 in die Brühvorrichtung bewegbar ist. Bevorzugt ist insbesondere unterhalb des Transportmittels 20 der in Figuren 3 bis 5 dargestellten Magazineinheit 10 eine Brühvorrichtung 30 wie in Figur 1 dargestellt zur Aufnahme der Portionskapsel in die Brühvorrichtung 30 angeordnet.

In **Figur 3** ist das Transportmittel 20 in einer Abgabestellung dargestellt. Insbesondere ist das Transportmittel 20 als Trommel 20 ausgebildet, wobei die Trommel 20 eine Mantelfläche 22 als Zurückhaltemittel 22 aufweist. Zunächst wird mittels der Drehbewegung des Trägers 12 wahlweise eine Magazinröhre im Bereich des Transportmittels 20, beispielsweise in eine durch einen Pfeil gekennzeichnete Vorschubrichtung 201, oberhalb des Transportmittels 20 positioniert. In Figur 3 ist das Transportmittel 20 in der Abgabestellung, wobei die unterste Portionskapsel 50 der Magazinröhre 11 durch das Zurückhaltemittel 22 zurückgehalten wird, indem der Kapselboden 51 der untersten Portionskapsel 50 auf dem Zurückhaltemittel aufliegt. Um das Transportmittel 20 in die Entnahmestellung zur Entnahme der untersten Portionskapsel 50 aus der Magazinröhre 11 zu überführen, wird das Transportmittel mittels einer Schwenkbewegung - im Beispiel von Figur 3 um 90 Grad dem Uhrzeigersinn entgegen - aus der Abgabestellung in die Entnahmestellung geschwenkt. Während das Transportmittel 20 von der Abgabestellung in die Entnahmestellung geschwenkt wird, gleitet das Zurückhaltemittel 22 - in Figur 3 die Mantelfläche 22 der Trommel 20 - am Kapselboden 51 der untersten Portionskapsel 50 entlang, bis das Transportmittel 20 die Entnahmestellung erreicht.

Die **Figur 4** zeigt das Transportmittel 20 in der Entnahmestellung. Die unterste Portionskapsel 50 fällt auf Grund der Kraftwirkung des Schwerefelds der Erde in Richtung des Schwerefelds der Erde 101, insbesondere parallel zur Stapelrichtung 101, in die als Ausnehmung 21 ausgebildete Kapselaufnahme 21 des Transportmittels 20 hinein. Dies ist in Figur 4 durch den Pfeil 202 dargestellt. Dabei liegt die aufgenommene Portionskapsel 50 mit dem Kapselboden 51 auf dem Ablagemittel 23, insbesondere der Ablagefläche 23, der Kapselaufnahme 21 auf. Bei einem anschließenden Verschwenken des Transportmittels 20 von der Entnahmestellung in die Abgabestellung wird die aufgenommene Portionskapsel 50 von dem Mitnahmemittel 24 derart geführt, dass der Kapselboden 51 der Portionskapsel 50 auf dem Ablagemittel 23 liegen bleibt, bis die Portionskapsel 50 aus dem Transportmittel 20, insbesondere in die unterhalb des Transportmittels angeordnete Brühvorrichtung 30, herausfällt. Gleichzeitig wird während des Verschwenkens des Transportmittels 20 von der Entnahmestellung in die Abgabestellung die nachfolgende Portionskapsel 50' durch das Zurückhaltemittel 22 des Transportmittels 20, insbesondere in Figur 3 beschriebenen Art und Weise, in der Magazinröhre 11 zurückgehalten.

In **Figur 5** ist das Transportmittel 20 in der Abgabestellung dargestellt, wobei die entnommene Portionskapsel 50 aus der Kapselaufnahme 23 in Richtung des Schwerefelds der Erde 101 herausbewegt wird. Dies ist in Figur 5 durch den Pfeil 203 angedeutet. Die Kapselaufnahme weist insbesondere an der entlang der Ablagefläche 23 der Mitnahmefläche 24 gegenüberliegenden Seite eine Öffnung auf, sodass die Kapsel in der Kapselaufnahmestellung - d.h. mit parallel zum Schwerefeld der Erde ausgerichteter Haupterstreckungsebene des Kapselbodens 51 und/oder Kapseldeckels 54 - aus der Kapselaufnahme 21 durch Kraftwirkung des Schwerefelds der Erde in der dargestellten Weise herausbewegt wird. Gleichzeitig wird die nachfolgende Kapsel 51' innerhalb der Magazinröhre 11 durch das Zurückhaltemittel 22 des Transportmittels 20 zurückgehalten. Dadurch wird mit vergleichsweise einfachen Mitteln eine Magazineinheit bereitgestellt, welche insbesondere in Kombination mit einer Brühvorrichtung einsetzbar ist, die eine Portionskapsel in lediglich eine zur Richtung des Schwerefelds der Erde 101 parallele Laderichtung 101 aufnimmt.

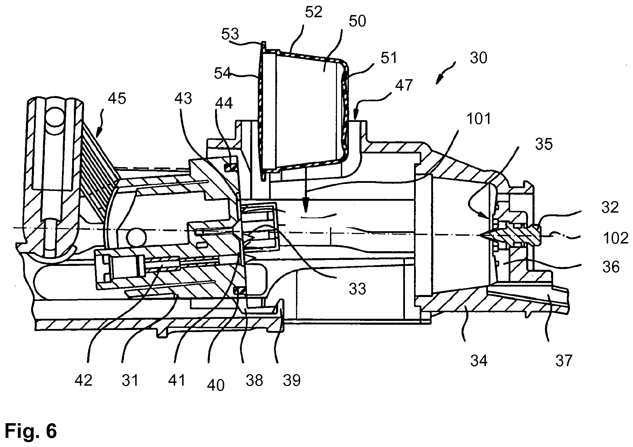

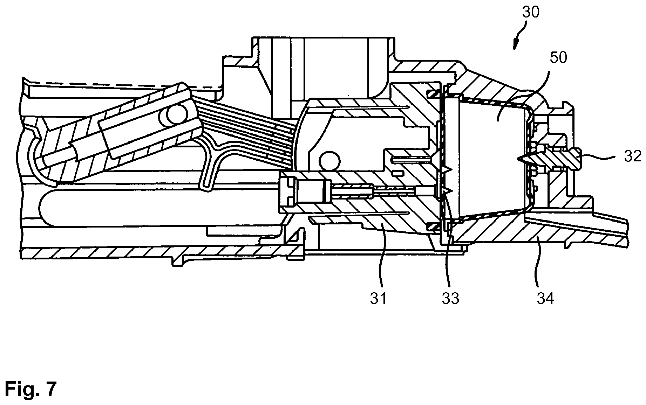

In **Figuren 6** **und** **7** sind schematische Schnittbildansichten einer Brühvorrichtung eines Brühsystems gemäß einer vierten Ausführungsform der vorliegenden Erfindung dargestellt.

In **Figur 6** ist das erste Brühkammerelement 31 in der Ladestellung illustriert,wobei das erste Brühkammerelement 31 entlang der Axialrichtung 102 von dem zweiten Brühkammerelement 34 beabstandet ist. In dieser Ausgangsposition wird entlang einer Laderichtung 101 die Portionskapsel 50 durch das Transportmittel 20 der Magazineinheit 10, 20 eingeführt. Ein als Teil des zweiten Brühkammerelements 34 ausgebildetes Gehäuse der Brühvorrichtung 30 weist dazu eine Zuführöffnung 47 auf, durch welche die Portionskapsel 50 eingeführt wird. Bevorzugt ist die Portionskapsel 50 rotationssymmetrisch ausgebildet und weist zwischen dem Kapselbode 51 und dem Kapseldeckel 54 einen Kegelstumpf 52 auf.

In **Figur 7** ist das erste Brühkammerelement 31 bis zum zweiten Brühkammerelement 34 entlang der Axialrichtung 102 in die Extraktionsstellung mittels des Kniehebelgelenks 45 verschoben, so dass die Portionskapsel 50 nahezu vollständig in das hohle Glockenelement 34 eingeführt ist und der Kapselboden 51 durch das als Aufstrechdorn 32 ausgebildete zweite Perforationsmittel 32 perforiert ist. Das erste 31 und das zweite Brühkammerelement 34 bilden somit eine hermetisch geschlossene Brühkammer 31, 34, in welcher die Portionskapsel 50 angeordnet ist. Ein Kapselflansch 53 der Portionskapsel 50 ist dabei zwischen dem ersten 31 und dem zweiten Brühkammerelement 34, insbesondere mittels eines elastischen Dichtungsrings 44, fest eingeklemmt.

In dieser Stellung wird der Extraktionsvorgang eingeleitet, d.h. der Brühkammer 31, 34 wird Extraktionsflüssigkeit in Form von druckbeaufschlagtem und erhitztem Wasser zugeführt. Die Extraktionsflüssigkeit wird dabei durch den Wasserzuführkanal 42 und die Ausbuchtung 41 zu den Wasseraustrittsöffnungen gefördert und gelangt dort durch die mittels der ersten Perforationsmittel 33 eines Perforationselements 43 erzeugten Perforationsöffnungen im Kapseldeckel 54 in die Portionskapsel 50. Die Getränkesubstanz wird von der Extraktionsflüssigkeit durchströmt, so dass sich ein Getränkeextrakt bildet, welcher die Portionskapsel 50 durch das mittels des Aufstrechdorns 32 im Kapselboden 51 erzeugte Perforationsloch wieder verlässt und durch die Vertiefung 36 in den Ablaufkanal 37 gelangt. Mittels des Ablaufkanals 37 wird der Getränkeextrakt vorzugsweise direkt einem nicht abgebildeten Trinkgefäß, wie einer Kaffeetasse zugeführt.

Nach dem Extraktionsvorgang wird das erste Brühkammerelement 31 von dem zweiten Brühkammerelement 34 entfernt, sodass die Portionskapsel 50 zunächst mit dem ersten Brühkammerelement 31 mitbewegt wird, bis die Portionskapsel 50 durch einen am Gehäuse angebrachten Auswerfer in Laderichtung aus der Brühvorrichtung entfernt wird. Die verbrauchte Portionskapsel 50 wird dabei vom ersten Brühkammerelement 31 soweit wieder mit zurückgezogen bis der Kapselflansch 53 in Kontakt mit dem Auswerfer 30 gelangt. Dadurch wird die Kapsel außer Eingriff mit dem Kapselhaltemittel 38 gebracht und fällt unter Schwerkraftwirkung selbstständig aus dem Bereich zwischen dem ersten 31 und dem zweiten Brühkammerelement 34.

### BEZUGSZEICHENLISTE

- 1: Brühsystem
- 10, 20: Magazineinheit
- 10: Vorratsmagazin
- 11: Magazinröhre
- 12: Träger / Drehteller
- 12': Durchlässiger Abschnitt
- 13: weiterer Träger
- 13': Weiterer durchlässiger Abschnitt
- 20: Transportmittel / Trommel
- 21: Ausnehmung
- 22: Zurückhaltemittel / Außenseite / Mantelfläche
- 23: Ablagemittel / Ablagefläche
- 24: Mitnahmemittel / Mitnahmefläche
- 30: Brühvorrichtung
- 31: Erstes Brühkammerelement
- 32: Zweites Perforationselement
- 33: Erstes Perforationsmittel
- 34: Zweites Brühkammerelement
- 35: Bodenbereich
- 36: Vertiefung
- 37: Ablaufkanal
- 38: Kapselhaltemittel
- 39: Auswerfer
- 40: Finger
- 41: Ausbuchtung
- 42: Wasserzuführkanal
- 43: Perforationselement
- 44: Dichtungsring
- 45: Kniehebelgelenk
- 46: Flächenbereich
- 47: Zuführöffnung
- 50, 50', 50": Portionskapsel
- 51: Kapselboden
- 52: Kegelstumpf
- 53: Kapselflansch
- 54: Kapseldeckel
- 101: Stapelrichtung / Laderichtung / Schwerefeld
- 101': Drehachse
- 102: Vorschubrichtung / Axialrichtung
- 102': Schwenkachse

## Patentansprüche

1. Magazineinheit (10, 20) zum Bestücken einer Brühvorrichtung (30) mit einer Portionskapsel (50, 50', 50"), wobei die Magazineinheit (10, 20) ein Vorratsmagazin (10) zur Bevorratung von Portionskapseln (50, 50', 50") aufweist, wobei die Portionskapseln (50, 50', 50") entlang einer Stapelrichtung (101) aufeinanderfolgend gestapelt sind, wobei die Magazineinheit (10, 20) ein Transportmittel (20) zum Transport einer Portionskapsel (50, 50', 50") aus dem Vorratsmagazin (10) in die Brühvorrichtung (30) aufweist, **dadurch gekennzeichnet, dass** das Transportmittel (20) zwischen einer Entnahmestellung zur Entnahme der Portionskapsel (50, 50', 50") aus dem Vorratsmagazin (20) und einer Abgabestellung zum Bestücken der Brühvorrichtung (30) mit der Portionskapsel (50, 50', 50") um eine Schwenkachse (102') schwenkbar ist, welche zur Stapelrichtung (101) senkrecht angeordnet ist, wobei das Transportmittel (20) eine Ausnehmung (21) zur Aufnahme der Portionskapsel (50, 50', 50") aufweist, wobei und das Transportmittel (20) trommelförmig ausgebildet ist, wobei die Außenseite (22) eine Mantelfläche (22) des Transportmittels (20) zum Zurückhalten der nachfolgenden Portionskapsel (50, 50', 50") in dem Vorratsmagazin (10) ist, wobei die Ausnehmung (21) ein als Mitnahmefläche (24) ausgebildetes Mitnahmemittel (24) und ein als Ablagefläche (23) ausgebildetes Ablagemittel (23) aufweist.

2. Magazineinheit (10, 20) nach Anspruch 1, **dadurch gekennzeichnet, dass** das Vorratsmagazin (10) mehrere auf einem Träger (12), insbesondere Drehteller (12), angeordnete Magazinröhren (11) aufweist, wobei jeweils eine Magazinröhre (11) zur Stapelung der Portionskapseln (50, 50', 50") entlang der Stapelrichtung (101) vorgesehen ist, wobei die Magazinröhren (11) wahlweise zusammen mit dem Träger (12) in eine Übergabeposition bewegbar sind, wobei der Träger (12) unter jeder Magazinröhre (11) einen durchlässigen Abschnitt (12') aufweist, wobei in der Übergabeposition unterhalb des durchlässigen Abschnitts (12') das Transportmittel (20) zum Transport der jeweils untersten Portionskapsel (50, 50', 50") aus dem Vorratsmagazin (10) in die Brühvorrichtung (30) angeordnet ist.

3. Magazineinheit (10, 20) nach einem der vorhergehenden Ansprüche, **dadurch gekennzeichnet, dass** die Ausnehmung (21) zur Aufnahme genau einer Portionskapsel (50, 50', 50") ausgebildet ist, wobei die Ausnehmung (21) ein Ablagemittel (23), insbesondere eine Ablagefläche (23), zur Ablage der Portionskapsel (50, 50', 50") in der Entnahmestellung und ein Mitnahmemittel (24), insbesondere eine Mitnahmefläche (24), zur Mitnahme der Portionskapsel (50, 50', 50") während einer Schwenkbewegung des Transportmittels (20) in die Abgabestellung aufweist.

4. Magazineinheit (10, 20) nach einem der vorhergehenden Ansprüche, **dadurch gekennzeichnet, dass** das Transportmittel (20) trommelförmig ausgebildet ist, wobei die Außenseite (22) eine Mantelfläche (22) des Transportmittels (20) zum Zurückhalten der nachfolgenden Portionskapsel (50, 50', 50") in dem Vorratsmagazin (10) ist, wobei die Ausnehmung (21) ein als Mitnahmefläche (24) ausgebildetes Mitnahmemittel (24) und ein als Ablagefläche (23) ausgebildetes Ablagemittel (23) aufweist.

5. Magazineinheit (10, 20) nach einem der vorhergehenden Ansprüche, **dadurch gekennzeichnet, dass** die Ausnehmung (21) derart ausgebildet ist, dass die Mitnahmefläche (24) die Ablagefläche (23) zu einer Seite hin begrenzt, wobei das Transportmittel (20) entlang der Ablagefläche (23) an der zur Mitnahmefläche (24) gegenüberliegenden Seite eine Öffnung zur Abgabe der Portionskapsel (50, 50', 50") an die Brühvorrichtung (30) in der Abgabestellung aufweist.

6. Brühsystem (1) mit einer Magazineinheit (10, 20) nach einem der vorhergehenden Ansprüche und einer Brühvorrichtung (30) mit einer Brühkammer (31, 34) zum Extrahieren und/oder Lösen einer in einer Portionskapsel (50) vorgesehenen Substanz, insbesondere Kaffee, wobei die Brühkammer (31, 34) ein erstes Brühkammerelement (31) und ein zweites Brühkammerelement (34) aufweist und das erste Brühkammerelement (31) zwischen einer Ladestellung, in welcher das erste (31) und das zweite Brühkammerelement (34) voneinander beabstandet sind, und einer Extraktionsstellung, in welcher das erste (31) und das zweite Brühkammerelement (34) zur Bildung einer im Wesentlichen geschlossenen Brühkammer (31, 34) einander angenähert sind, bewegbar ist.

7. Verfahren zum Bestücken einer Brühvorrichtung (30) mit einer Portionskapsel (50, 50', 50"), wobei in einem ersten Verfahrensschritt Portionskapseln (50, 50', 50") in einem Vorratsmagazin (10) zur Bevorratung entlang einer Stapelrichtung (101) gestapelt werden, wobei in einem zweiten Verfahrensschritt eine Portionskapsel (50, 50', 50") von einer Außenseite (22) des als Trommel ausgebildeten Transportmittels (20) in dem Vorratsmagazin (10) zurückgehalten wird, wobei in einem dritten Verfahrensschritt die Portionskapsel (50, 50', 50") in einer Entnahmestellung des Transportmittels (20) in eine Ausnehmung (21) des Transportmittels (20) bewegt wird, wobei in einem vierten Verfahrensschritt die Portionskapsel (50, 50', 50") in einer Abgabestellung des Transportmittels (20) zur Bestückung der Brühvorrichtung (30) in die Brühvorrichtung (30) bewegt wird, wobei das Transportmittel (20) zwischen der Entnahmestellung und der Abgabestellung um Schwenkachse (102') geschwenkt wird, welche zur Stapelrichtung (101) senkrecht angeordnet ist.

8. Verfahren nach Anspruch 7, **dadurch gekennzeichnet, dass** während der Schwenkbewegung des Transportmittels (20) zwischen der Entnahmestellung und der Abgabestellung gleichzeitig die nachfolgende Portionskapsel (50, 50', 50") von der Außenseite (22) des Transportmittels (20) zurückgehalten wird.

9. Verfahren nach Anspruch 7 oder 8, **dadurch gekennzeichnet, dass** die Portionskapsel (50, 50', 50") im dritten Verfahrensschritt derart in die Ausnehmung (21) des Transportmittels (20) bewegt wird, dass die Portionskapsel (50, 50', 50") mit dem Kapselboden (51) auf einem Ablagemittel (23), insbesondere einer Ablagefläche (23), der Ausnehmung (21) zum Liegen kommt, wobei die Portionskapsel (50, 50', 50") während der Schwenkbewegung von der Entnahmestellung in die Abgabestellung von einem Mitnahmemittel (24) des Transportmittels (20), insbesondere einer Mitnahmefläche (24), geführt wird.

## Claims

1. A magazine unit (10, 20) for providing a brewing device (30) with a portion capsule (50, 50', 50"), wherein the magazine unit (10, 20) has a storage magazine (10) for storing portion capsules (50, 50', 50"), wherein the portion capsules (50, 50', 50") are stacked one after the other in a stacking direction (101), wherein the magazine unit (10, 20) has a transport means (20) for transporting a portion capsule (50, 50', 50") from the storage magazine (10) into the brewing device (30), **characterized in that** the transport means (20) can be pivoted about a pivot axis (102') which is arranged perpendicularly to the stacking direction (101), wherein the transport means (20) has a recess (21) for receiving the portion capsule (50, 50', 50"), wherein and the transport means (20) is constructed in a drum-like manner, wherein the outer side (22) is a covering face (22) of the transport means (20) in order to retain the subsequent portion capsule (50, 50', 50") in the storage magazine (10), wherein the recess (21) has a carrier means (24) which is constructed as a carrier face (24) and a depositing means (23) which is constructed as a depositing face (23).

2. The magazine unit (10, 20) as claimed in claim 1, **characterized in that** the storage magazine (10) has a plurality of magazine tubes (11) which are arranged on a carrier (12), in particular a rotary plate (12), wherein a magazine tube (11) is provided for stacking the portion capsules (50, 50', 50") in the stacking direction (101), wherein the magazine tubes (11) are selectively movable with the carrier (12) into a transfer position, wherein the carrier (12) has a permeable portion (12') under each magazine tube (11), wherein the transport means (20) for transporting the lowermost portion capsule (50, 50', 50") from the storage magazine (10) to the brewing device (30) is arranged under the permeable portion (12') in the transfer position.

3. The magazine unit (10, 20) as claimed in either of the preceding claims, **characterized in that** the recess (21) is constructed to receive precisely one portion capsule (50, 50', 50"), wherein the recess (21) has a depositing means (23), in particular a depositing face (23), for depositing the portion capsule (50, 50', 50") in the removal position and a carrier means (24), in particular a carrier face (24), for carrying the portion capsule (50, 50', 50") during a pivot movement of the transport means (20) into the discharge position.

4. The magazine unit (10, 20) as claimed in one of the preceding claims, **characterized in that** the transport means (20) is constructed in a drum-like manner, wherein the outer side (22) is a covering face (22) of the transport means (20) for retaining the subsequent portion capsule (50, 50', 50") in the storage magazine (10), wherein the recess (21) has a carrier means (24) which is constructed as a carrier face (24) and a depositing means (23) which is constructed as a depositing face (23).

5. The magazine unit (10, 20) as claimed in one of the preceding claims, **characterized in that** the recess (21) is constructed in such a manner that the carrier face (24) delimits the depositing face (23) toward one side, wherein the transport means (20) has an opening along the depositing face (23) at the side opposite with respect to the carrier face (24) in order to discharge the portion capsule (50, 50', 50") to the brewing device (30) in the discharge position.

6. A brewing system (1) having a magazine unit (10, 20) as claimed in one of the preceding claims and a brewing device (30) having a brewing chamber (31, 34) for extracting and/or releasing a substance, in particular coffee, which is provided in a portion capsule (50), wherein the brewing chamber (31, 34) has a first brewing chamber element (31) and a second brewing chamber element (34) and the first brewing chamber element (31) is movable between a loading position, in which the first brewing chamber element (31) and the second brewing chamber element (34) are spaced apart from each other, and an extraction position, in which the first brewing chamber element (31) and the second brewing chamber element (34) are moved toward each other in order to form a substantially closed brewing chamber (31, 34).

7. A method for providing a brewing device (30) with a portion capsule (50, 50', 50"), wherein in a first method step portion capsules (50, 50', 50") are stacked in a storage magazine (10) for storage in a stacking direction (101), wherein in a second method step a portion capsule (50, 50', 50") is retained by an outer side (22) of the transport means (20) in the form of a drum in the storage magazine (10), wherein in a third method step the portion capsule (50, 50', 50") is moved in a removal position of the transport means (20) into a recess (21) of the transport means (20), wherein in a fourth method step the portion capsule (50, 50', 50") is moved into the brewing device (30) in a discharge position of the transport means (20) in order to charge the brewing device (30), wherein the transport means (20) is pivoted about a pivot axis (102') which is arranged perpendicularly to the stacking direction (101) between the removal position and the discharge position.

8. The method as claimed in claim 7, **characterized in that** the subsequent portion capsule (50, 50', 50") is simultaneously retained by the outer side (22) of the transport means (20) during the pivot movement of the transport means (20) between the removal position and the discharge position.

9. The method as claimed in claim 7 or claim 8, **characterized in that** the portion capsule (50, 50', 50") is moved in the third method step into the recess (21) of the transport means (20) in such a manner that the portion capsule (50, 50', 50") comes to rest with the capsule base (51) on a depositing means (23), in particular a depositing face (23), of the recess (21), wherein the portion capsule (50, 50', 50") is guided during the pivot movement from the removal position into the discharge position by a carrier means (24) of the transport means (20), in particular a carrier face (24).

## Revendications

1. Unité de chargeur (10, 20) pour garnir un dispositif de percolation (30) avec une capsule (50, 50', 50"), dans laquelle l'unité de chargeur (10, 20) présente un chargeur de réserve (10) pour le stockage de capsules (50, 50', 50"), dans laquelle les capsules (50, 50', 50") sont empilées l'une après l'autre le long d'une direction d'empilement (101), dans laquelle l'unité de chargeur (10, 20) présente un moyen de transport (20) pour le transport d'une capsule (50, 50', 50") du chargeur de réserve (10) au dispositif de percolation (30), **caractérisée en ce que** le moyen de transport (20) peut pivoter autour d'un axe de pivotement (102'), qui est disposé perpendiculairement à la direction d'empilement (101), entre une position de prélèvement pour prélever la capsule (50, 50', 50") hors du chargeur de réserve (20) et une position de délivrance pour garnir le dispositif de percolation (30) avec la capsule (50, 50', 50"), dans laquelle le moyen de transport (20) présente un évidement (21) destiné à contenir la capsule (50, 50', 50"), dans laquelle le moyen de transport (20) est réalisé en forme de tambour, dans laquelle le côté extérieur (22) est une surface latérale (22) du moyen de transport (20) destinée à retenir la capsule suivante (50, 50', 50") dans le chargeur de réserve (10), dans laquelle l'évidement (21) présente un moyen d'entraînement (24) réalisé en forme de face d'entraînement (24) et un moyen de dépôt (23) réalisé en forme de face de dépôt (23).

2. Unité de chargeur (10, 20) selon la revendication 1, **caractérisée en ce que** le chargeur de réserve (10) présente plusieurs tubes de chargeur (11) disposés sur un support (12), en particulier un plateau tournant (12), dans laquelle il est chaque fois prévu un tube de chargeur (11) pour l'empilement des capsules (50, 50', 50") le long de la direction d'empilement (101), dans laquelle les tubes de chargeur (11) peuvent être déplacés au choix avec le support (12) dans une position de transfert, dans laquelle le support (12) présente en dessous de chaque tube de chargeur (11) une partie découpée libre (12'), dans laquelle le moyen de transport (20) pour le transport de la capsule chaque fois inférieure (50, 50', 50") du chargeur de réserve (10) au dispositif de percolation (30) est disposé dans la position de transfert en dessous de la partie découpée libre (12').

3. Unité de chargeur (10, 20) selon l'une quelconque des revendications précédentes, **caractérisée en ce que** l'évidement (21) est configuré pour contenir exactement une capsule (50, 50', 50"), dans laquelle l'évidement (21) présente un moyen de dépôt (23), en particulier une face de dépôt (23), pour le dépôt de la capsule (50, 50', 50") dans la position de prélèvement et un moyen d'entraînement (24), en particulier une face d'entraînement (24), pour l'entraînement de la capsule (50, 50', 50") pendant un mouvement de pivotement du moyen de transport (20) dans la position de délivrance.

4. Unité de chargeur (10, 20) selon l'une quelconque des revendications précédentes, **caractérisée en ce que** le moyen de transport (20) est réalisé en forme de tambour, dans laquelle le côté extérieur (22) est une surface latérale (22) du moyen de transport (20) destinée à retenir la capsule suivante (50, 50', 50") dans le chargeur de réserve (10), dans laquelle l'évidement (21) présente un moyen d'entraînement (24) réalisé en forme de face d'entraînement (24) et un moyen de dépôt (23) réalisé en forme de face de dépôt (23).

5. Unité de chargeur (10, 20) selon l'une quelconque des revendications précédentes, **caractérisée en ce que** l'évidement (21) est réalisé de telle manière que la face d'entraînement (24) limite la face de dépôt (23) vers un côté, dans laquelle le moyen de transport (20) présente le long de la face de dépôt (23), sur le côté opposé à la face d'entraînement (24), une ouverture pour la délivrance de la capsule (50, 50', 50") au dispositif de percolation (30) dans la position de délivrance.

6. Système de percolation (1) avec une unité de chargeur (10, 20) selon l'une quelconque des revendications précédentes et un dispositif de percolation (30) avec une chambre de percolation (31, 34) pour l'extraction et/ou la dissolution d'une substance prévue dans une capsule (50), en particulier de café, dans lequel la chambre de percolation (31, 34) présente un premier élément de chambre de percolation (31) et un deuxième élément de chambre de percolation (34) et le premier élément de chambre de percolation (31) peut être déplacé entre une position de chargement, dans laquelle le premier (31) et le deuxième (34) éléments de chambre de percolation sont espacés l'un de l'autre, et une position d'extraction, dans laquelle le premier (31) et le deuxième (34) éléments de chambre de percolation sont rapprochés l'un de l'autre pour former une chambre de percolation (31, 34) essentiellement fermée.

7. Procédé pour garnir un dispositif de percolation (30) avec une capsule (50, 50', 50"), dans lequel dans une première étape de procédé on empile des capsules (50, 50', 50") dans un chargeur de réserve (10) pour le stockage le long d'une direction d'empilement (101), dans lequel dans une deuxième étape de procédé on retient une capsule (50, 50', 50") dans le chargeur de réserve (10) au moyen d'un côté extérieur (22) du moyen de transport (20) réalisé en forme de tambour, dans lequel dans une troisième étape de procédé on déplace la capsule (50, 50', 50") dans une position de prélèvement du moyen de transport (20) dans un évidement (21) du moyen de transport (20), dans lequel dans une quatrième étape de procédé on déplace la capsule (50, 50', 50") dans le dispositif de percolation (30) dans une position de délivrance du moyen de transport (20) pour garnir le dispositif de percolation (30), dans lequel on fait pivoter le moyen de transport (20) entre la position de prélèvement et la position de délivrance autour de l'axe de pivotement (102'), qui est disposé perpendiculairement à la direction d'empilement (101).

8. Procédé selon la revendication 7, **caractérisé en ce que** pendant le mouvement de pivotement du moyen de transport (20) entre la position de prélèvement et la position de délivrance, on retient en même temps la capsule suivante (50, 50', 50") au moyen du côté extérieur (22) du moyen de transport (20).

9. Procédé selon la revendication 7 ou 8, **caractérisé en ce que** l'on déplace la capsule (50, 50', 50") dans la troisième étape de procédé dans l'évidement (21) du moyen de transport (20), de telle manière que la capsule (50, 50', 50") vienne se placer avec le fond de capsule (51) sur un moyen de dépôt (23), en particulier une face de dépôt (23), de l'évidement (21), dans lequel on guide la capsule (50, 50', 50") au moyen d'un moyen d'entraînement (24) du moyen de transport (20), en particulier une face d'entraînement (24), pendant le mouvement de pivotement de la position de prélèvement à la position de délivrance.
